# EUROPEAN PATENT SPECIFICATION

(11) **EP 1 982 369 B1**
(45) Date of publication and mention of the grant of the patent: **28.09.2011**
(21) Application number: 07705176.1
(22) Date of filing: 07.02.2007
(51) Int. Cl.: H01M 4/32, H01M 4/52, C01G 53/04, H01G 9/04

(54) **AN ELECTRODE FOR AN ELECTROCHEMICAL CELL COMPRISING MESOPOROUS NICKEL HYDROXIDE**
ELEKTRODE FÜR EINE ELEKTROCHEMISCHE ZELLE MIT MESOPORÖSEM NICKELHYDROXID
ÉLECTRODE POUR UNE PILE ÉLECTROCHIMIQUE COMPRENANT DE L'HYDROXYDE DE NICKEL MÉSOPOREUX

(30) Priority: 08.02.2006 GB 0602547
(43) Date of publication of application: 22.10.2008
(73) Proprietor: Nanotecture Ltd., Chilworth Science Park Southampton SO16 7NS (GB)
(72) Inventor: COOWAR, Fazlil, Southampton SO16 6QE (GB)
(74) Representative: Nieuwenhuys, William Francis
(86) International application number: PCT/GB2007/000445
(87) International publication number: WO 2007/091076

(56) References cited:
- EP-A- 0 987 776
- EP-A1- 0 353 837
- EP-A1- 0 935 301
- WO-A-2004/054016
- US-A- 4 844 999
- XIU S. ZHAO, G.Q. LU, GRAEME J. MILLAR: "Advances in mesoporous molecular sieve MCM-41" IND. ENG. CHEM. RES., vol. 35, 1996, pages 2075-2090, XP002432318

## Description

The present invention relates to a novel electrochemical cell, which may be a battery or a supercapacitor or both, and which uses nickel hydroxide [Ni(OH)₂] as the positive electrode. In accordance with the present invention, the nickel hydroxide is preferably in the form of a mesoporous material and has been made using a liquid crystal templating route.

The mesoporous materials used in the present invention are sometimes referred to as "nanoporous". However, since the prefix "nano" strictly means 10⁻⁹, and the pores in such materials normally range in size from 10⁻⁸ to 10⁻⁹ m, it is better to refer to them, as we do here, as "mesoporous".

In recent years, much time and attention has been focussed on attempts to improve the performance of various types of electrochemical cell, especially supercapacitors, batteries and combined supercapacitor/batteries. Two requirements, in particular, have been addressed - the need for improved power density and the need for improved energy density.

It should be noted that the term "battery" is used herein in its common meaning of a device that converts the chemical energy contained in its active components directly into electrical energy by means of a redox (oxidation-reduction) reaction. The basic unit of a battery is an electrochemical cell, which will comprise at least a positive electrode, a negative electrode and an electrolyte, the whole contained within a casing. Other components, such as separators, may be included, as is well known in the art. A battery may consist of one or more such cells.

The use of nickel hydroxide as part of the positive electrode in electrochemical cells is known. For example, Nelson et al. [Journal of The Electrochemical Society, 150 (10), A1313-1317 (2003)] describe the preparation of a positive electrode by the liquid crystal templated deposition of mesoporous nickel. In the course of the first few cycles of the resulting cell, a layer of the nickel is converted to its hydroxide, which is the electrochemically active material. However, the bulk of the electrode (apart from the substrate on which the nickel is deposited - gold in this case) comprises nickel metal, with the nickel hydroxide as merely a surface coating.

Xing et al. [Acta Chimica Silica, Vol. 63, X, 1-X (2005)] describe the preparation of a material which they describe as "mesoporous nickel hydroxide", which is then calcined to give mesoporous nickel oxide (NiO), which is then used as the positive electrode for Electrochemical cells. It should, however, be noted that this process does not use the liquid crystal templating method critical to the present invention.

US 4,844,999 and EP 0 353 837 A1 disclose a nickel electrode for an alkaline battery comprising a mesoporous nickel hydroxide.

EP 0 987 776 A1 discloses the preparation of a metal oxide with ordered pores. The oxide can be used for intercalating and deintercalating lithium ions in a secondary battery. The preparation involves a liquid-crystalline template.

WO 2004/054016 A2 describes the preparation of an electrode comprising a conductive metallic nickel layer on which nickel hydroxide is deposited. The metallic nickel layer is mesoporous and has been formed by a liquid crystal template process.

We have now surprisingly found that an electrochemical cell having an improved power density can be prepared by using as the positive electrode nickel hydroxide supported on a conventional substrate, the active component of the electrode consisting essentially of only the nickel hydroxide, and the nickel hydroxide having been prepared by a liquid crystal templating process.

Thus, the present invention consists in an electrode for an electrochemical cell, which comprises mesoporous nickel hydroxide having a pore size within the range from 1 to 50 nm and being substantially free from metallic nickel or nickel oxide, together with a conductivity enhancer and a binder, the nickel hydroxide having been prepared by depositing nickel hydroxide from a liquid crystal templating medium.

The invention further provides an electrochemical cell comprising a positive electrode, a negative electrode and an electrolyte in a container therefore, the positive electrode comprising mesoporous nickel hydroxide having a pore size within the range from 1 to 50 nm and being substantially free from metallic nickel or nickel oxide, together with a conductivity enhancer and a binder, the nickel hydroxide having been prepared by depositing nickel hydroxide from a liquid crystal templating medium.

The invention further provides a process for preparing an electrochemical cell, which process comprises:
(a) depositing nickel hydroxide from a liquid crystal templating medium to form a mesoporous nickel hydroxide;
(b) forming an electrode by mixing said mesoporous nickel hydroxide substantially free from metallic nickel or nickel oxide with a conductivity enhancer and a binder; and
(c) assembling an electrochemical cell comprising, as the positive electrode, the electrode formed in step (b), associated with a current collector.

In the accompanying drawings:
Figure 1 shows the pore size distribution of the product of Example 1;
Figure 2 shows the constant current discharge data for the mesoporous Ni(OH)₂ based composite electrode of Example 5 at 1C rate (1 hour discharge time);
Figure 3 compares the decrease in discharge capacity (expressed as a percentage of the maximum capacity retained) of the 320 µm thick mesoporous Ni(OH)₂ based composite electrode of Example 5 with commercially sourced materials as a function of discharge rate; and
Figure 4 compares the capacity retentive ability of the Ni-Cd cell of Example 6 containing mesoporous Ni(OH)₂ with the capacity retention of a cell using commercially available Ni(OH)₂

By "mesoporous", as applied to structures, materials, films etc., we mean structures, materials and films, respectively, that have been fabricated via a liquid crystal templating process. These often have a generally regular arrangement of pores having a defined topology and a substantially uniform pore size (diameter). Accordingly, the mesoporous structures, materials and films may also be described as nanostructured or having nanoarchitecture.

Therefore, the mesoporous materials used in accordance with the invention are distinct from poorly crystallised materials and from composites with discrete nano-sized solid grains, e.g. conventionally denoted 'nanomaterials' that are composed of aggregated nanoparticulates.

The mesoporous nickel hydroxide preferably has a substantially regular pore structure and uniform pore size within the range from 1 to 50 nm. In particular, we prefer that at least 75% of pores have pore diameters to within 60%, more preferably within 30%, still more preferably within 10%, and most preferably within 5%, of average pore diameter.

The average pore size of the mesoporous material is from 1 to 50 nm, more preferably from 1 to 20 nm and most preferably from 1.5 to 12 nm.

The regular pore structure of the mesoporous nickel hydroxide may for example be cubic, lamellar, oblique, centred rectangular, body-centred orthorhombic, body-centred tetragonal, rhombohedral or hexagonal. Preferably the regular pore structure is hexagonal.

It will be appreciated that these pore topologies are not restricted to ideal mathematical topologies, but may include distortions or other modifications of these topologies, provided recognisable architecture or topological order is present in the spatial arrangement of the pores in the film related to the structure present in the liquid crystal template. Thus, term "hexagonal" as used herein encompasses not only materials that exhibit mathematically perfect hexagonal symmetry within the limits of experimental measurement, but also those with significant observable deviations from the ideal state, provided that most channels are surrounded by approximately six nearest-neighbour channels at substantially the same distance. Similarly, the term "cubic" as used herein encompasses not only materials that exhibit mathematically perfect symmetry belonging to cubic space groups within the limits of experimental measurement, but also those with significant observable deviations from the ideal state, provided that most channels are connected to between two and six other channels.

Templating using the properties of liquid crystals is now a well known technique, and the mesoporous nickel hydroxide used in the present invention may be prepared by this technique using materials and conditions well known to those skilled in the art. For example, suitable electrochemical deposition methods are disclosed in EP-A-993,512; Nelson, et al., "Mesoporous Nickel/Nickel Oxide Electrodes for High Power Applications", J. New Mat Electrochem. Systems, 5, 63-65 (2002); Nelson, et al., "Mesoporous Nickel/Nickel Oxide - a Nanoarchitectured Electrode ", Chem. Mater., 2002, 14, 524-529. Suitable chemical precipitation methods are disclosed in US-A-6,203,925.

Preferably, the mesoporous material is formed by chemical or electrochemical deposition from a lyotropic liquid crystalline phase. According to a general method, a template is formed by self-assembly from certain long-chain surfactants and water into a desired liquid crystal phase, such as a hexagonal phase. Suitable surfactants include octaethylene glycol monohexadecyl ether (C₁₆EO₈), which has a long hydrophobic hydrocarbon tail attached to a hydrophilic oligoether head group. Others include the polydisperse surfactants Brij^{®}56 (C₁₆EOₙ where n~10), Brij^{®}78 (C₁₆EOₙ where n~20), and Pluronic 123, each available from Aldrich, and BC-10TX [approximately C₁₆(EO)₁₀], available from Nikko Chemicals Co. Ltd. of Japan. At high (>30%) aqueous concentrations, and dependent on the concentration and temperature used, the aqueous solution can be stabilised in a desired lyotropic liquid crystal phase, for example a hexagonal phase, consisting of separate hydrophilic and hydrophobic domains, with the aqueous solution being confined to the hydrophilic domain. Dissolved inorganic salts, for example nickel acetate, will also be confined to the hydrophilic domain, and may be electro-precipitated at an electrode immersed in the solution, to form a solid mesophase that is a direct cast of the aqueous domain phase structure. Subsequent removal of the surfactant, by washing in a suitable solvent, leaves an array of pores in the electro-precipitated solid, the arrangement of the pores being determined by the lyotropic liquid crystal phase selected. The topology, size, periodicity and other pore characteristics may be varied by appropriate selection of the surfactant, solvent, metal salts, hydrophobic additives, concentrations, temperature, and deposition conditions, as is known in the art. Alternatively, the nickel hydroxide may be formed chemically by reaction in the presence of one or more of the above surfactants, for example by reacting a nickel salt, such as nickel sulphate, with an alkali, such as sodium hydroxide or potassium hydroxide.

After preparation of the mesoporous nickel hydroxide, it is used to form a positive electrode in an electrochemical cell. The nickel hydroxide is mixed with a conductivity enhancer and a binder. There is no particular restriction on the nature or number of different types of the conductivity enhancer and binder which may be used and any such material commonly used for these purposes may equally be used here. Suitable conductivity enhancers include carbon in its various forms, especially acetylene black. A suitable binder is polytetrafluoroethylene.

The nickel hydroxide mixture is then preferably placed on a current collector or support, which is preferably a metal or carbon, and is more preferably of a cellular construction with cells of sufficient size that the nickel hydroxide is sufficiently supported by the substrate. A suitable support and current collector is metallic nickel, preferably a nickel foam or sintered nickel fibre or plate.

The electrochemical cell is then assembled using this as the positive electrode. The construction of such cells, whether supercapacitors or batteries, is well known to those skilled in the art, and needs no detailed description here. The negative electrode, electrolyte and container for these with the positive electrode may all be of conventional materials. For best results, the negative electrode will, like the positive electrode, be of a mesoporous material. A suitable material for the negative electrode is carbon or cadmium.

The cell may also contain separators, current collectors and other materials or structures commonly incorporated into electrochemical cells. The cell will normally be assembled in a container and sealed with an appropriate closure.

The invention is further illustrated by the following non-limiting Examples.

### EXAMPLE 1

### Mesoporous Ni(OH)₂ Synthesis 1

Two glass beakers each containing molten BC-10TX (12 g) were prepared. To one of the beakers was added an aqueous solution of sodium hydroxide (8.0 mL; 3.3 M; 26.4 mmol); the mixture was then stirred until cooled to room temperature. To the second beaker was added a solution comprising nickel(II) sulphate (6.0 mL; 1.65 M; 9.9 mmol) and cobalt(II) chloride (2.0 mL; 1.65 M; 3.3 mmol), and the mixture was stirred until cooled to room temperature. The two viscous mixtures were then combined, with stirring, until a homogenous mixture of the hexagonal phase was obtained.

After standing at ambient temperature overnight the reaction mixture was added to cold, deionised water (300 mL) and stirred at room temperature for 20 minutes. The resulting suspension was separated via centrifugation (2500 rpm; 10 minutes), and the solid was collected. The washing procedure was then repeated three times in water at ~60°C, and then in hot methanol a further three times. The final material was then dried in an oven held at 65°C overnight.

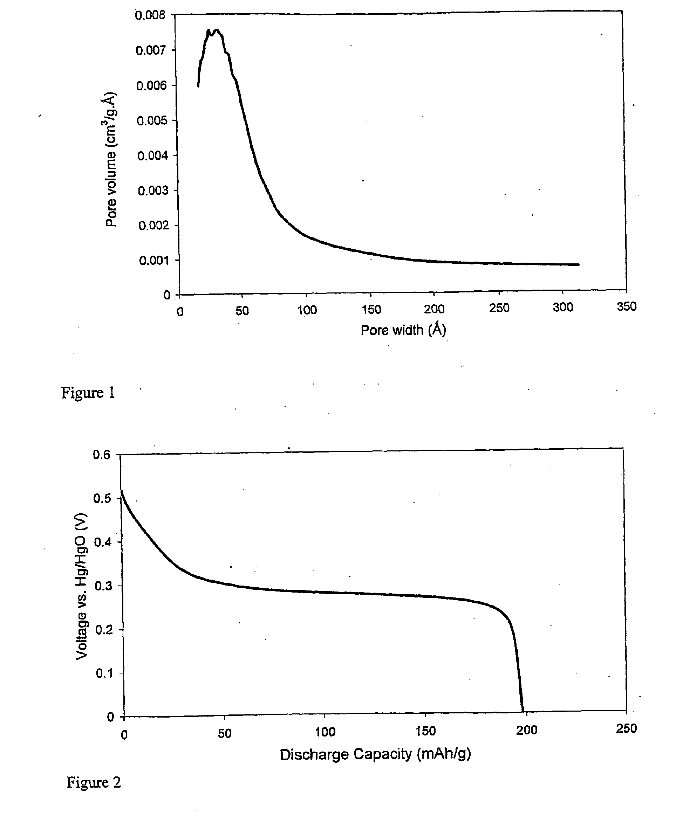

BET analysis revealed a surface area of 430 m²/g. The pore size distribution is shown in Figure 1. The majority of the pore volume is in the mesopore region, centred around 30 Ǻ (3 mn). According to XPS analysis the material consisted of nickel in the Ni(II) valence state - Ni(OH)₂. There was no evidence of metallic nickel present.

### EXAMPLE 2

### Mesoporous Ni(OH)₂ Synthesis 2

BC-10TX surfactant (27.5g) was heated at 70°C until molten. Dimethylamineborane (DMAB, 4.4 g; 75.0 mmol) was added to the molten surfactant, and the mixture was heated for a further hour at 70°C. A solution containing nickel(II) sulphate (16.9 mL); 1.65 M; 27.9 mmol) and cobalt(II) chloride (5.6 mL; 1.65 M; 9.2 mmol) was prepared and added slowly to the molten surfactant/DMAB mixture, with stirring. The reaction mixture was then heated for a further 5 minutes, before being removed from the heat and stirred until cooled to room temperature.

After standing at ambient temperature for 2-3 days, the reaction mixture was added to deionised water (300 mL) and stirred at room temperature for 20 minutes. The resulting suspension was separated via centrifugation (2500 rpm; 10 minutes) and the solid was collected. This washing procedure was then repeated three times in water at ~60C, and then in hot methanol a further three times. The final material was then dried in an oven at 65°C overnight. BET analysis showed a surface area of 452 m²/g.

### EXAMPLE 3

### Mesoporous Ni(OH)₂ Synthesis 3

BC-10TX surfactant (27.5g) was heated at 80°C until molten. Dimethylamineborane (4.4 g; 75.0 mmol) was added to the molten surfactant, and the mixture was heated for a further hour at 80°C. A solution containing nickel(II) sulphate (16.9 mL; 1.65 M; 27.9 mmol) and cobalt(II) chloride (5.6 mL; 1.65 M; 9.2 mmol) was prepared and added to the molten surfactant/DMAB mixture. The reaction mixture was then stirred until cooled to room temperature.

After standing at ambient temperature for 2-3 days, the reaction mixture was added to cold, deionised water (300 mL) and stirred at room temperature for 20 minutes. The resulting suspension was separated via centrifugation (2500 rpm; 10 minutes) and the solid was collected. The washing procedure was then repeated three times in water at 60°C, and then in hot methanol a further three times. The final material was then dried in an oven held at ~65°C overnight. BET analysis showed a surface area of 465 m²/g.

### EXAMPLE 4

### Composite Electrode Preparation

Composite electrodes were prepared using mesoporous nickel hydroxide (active material, prepared as in Example 1), acetylene black and polytetrafluoroethylene (PTFE) and using the (dry weight) composition ratio 80:18:2.

This was done by first adding 0.18 g of acetylene black to 0.8 g of nickel hydroxide and 0.12 mL of propan-2-ol (IPA). These were mixed using a mortar and pestle for 15 minutes. The mixed material was transferred to a vial containing approximately 3 mL of IPA under stirring at ambient temperature. The resulting slurry was then stirred for 5 minutes, before sonicating the slurry for 35 minutes.

After sonication, 0.02 g of PTFE binder (as a 60 wt. % suspension of PTFE in water) was added to the slurry. The slurry was then stirred overnight at ambient temperature. ,

After stirring, the slurry was heated at 45°C until the slurry reached the desired viscosity for coating onto a nickel foam current collector. A composite electrode of 1 cm² geometric area was prepared by coating the slurry onto nickel foam (1.7 mm thick) using a spatula. Once the foam was fully impregnated with the slurry, the electrode was dried at 45°C on a hotplate for 20 minutes, and then at 70°C under vacuum for 1 hour. The electrodes were then calendared to a thickness of 320 µm.

### EXAMPLE 5

### Composite Electrode Electrochemical Testing

Before cycling, the Ni(OH)₂ based composite electrode was impregnated with 6M KOH electrolyte under vacuum. Electrochemical evaluation of the composite electrode was carried out using a three-electrode electrochemical cell with a counter electrode consisting of high surface area carbon pressed into nickel mesh. A Hg/HgO reference electrode was used to monitor the working electrode potential. Prior to gathering electrochemical performance data the electrode was conditioned or formed by electrochemically cycling it as is commonly done in the art.

The composite electrode was tested by constant current charge/discharge cycling between 0 V and 0.5 V vs. the reference electrode. First, an initial capacity check was undertaken by charging the cell at C/10 rate to a 150 % depth of charge and discharged at C/10. Rate test currents were then carried out using the practical discharge capacity obtained from the C/10 capacity check. The electrode was rate-tested at the following rates: C/5, C/2, 1C, 2C, 3C, 5C, 7C, 10C, 20C, 30C, 60C, 100C, 150C, 200C and 250C.

Table 1 demonstrates the decrease in discharge capacity (in terms of mAh/g and as a percentage of the capacity at C/5 rate) for the mesoporous Ni(OH)₂ based composite electrode as the discharge rate is increased.

**Table 1**

| **C Rate** | **Capacity (mAh/g)** | **Capacity Retention (%)** |
|---|---|---|
| C/5 | 192 | 100 |
| C/2 | 200 | 104 |
| C | 198 | 103 |
| 2C | 195 | 102 |
| 3C | 192 | 100 |
| 5C | 186 | 97 |
| 7C | 182 | 95 |
| 10C | 177 | 92 |
| 20C | 165 | 86 |
| 30C | 150 | 78 |
| 60C | 122 | 64 |
| 100C | 79 | 41 |
| 150C | 14.7 | 28 |
| 200C | 3.75 | 7 |
| 250C | 0.08 | 0.2 |

Figure 2 shows the constant current discharge data for the mesoporous Ni(OH)₂ based composite electrode at 1C rate (1 hour discharge time). The capacity at this rate is 198 mAh/g.

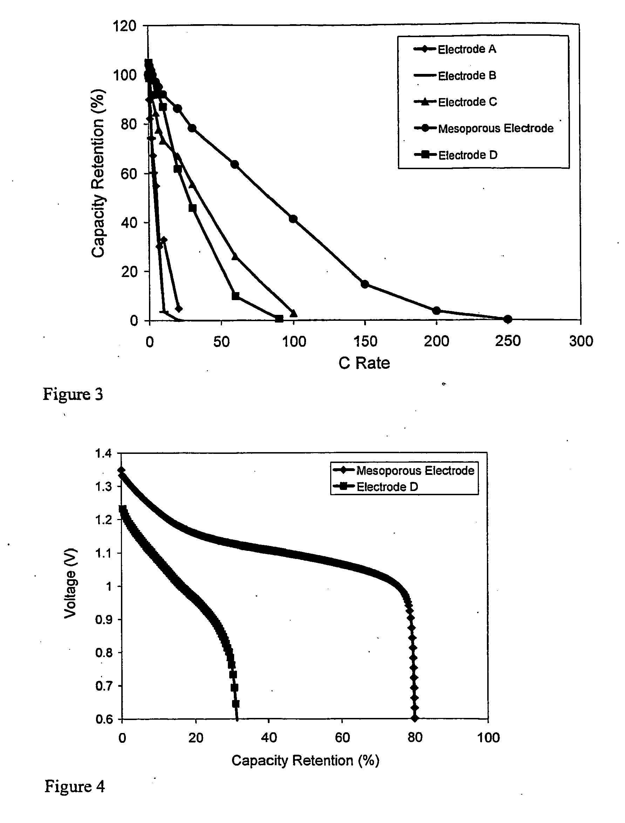

Figure 3 compares the decrease in discharge capacity (expressed as a percentage of the maximum capacity retained) of the 320 µm thick mesoporous Ni(OH)₂ based composite electrode with commercially sourced materials as a function of discharge rate. The mesoporous composite electrode clearly has superior capacity retention at high discharge rates compared with the commercially available Ni(OH)₂ based composite electrodes, indicating high power performance. Electrode A is a commercially available composite positive electrode with thickness of approximately 800 µm used in nickel-metal hydride batteries. Electrode B is a composite positive electrode of approximately 500 µm thickness used in supercapacitor cells. Electrode C is an approximately 320 µm thick positive electrode used in a commercially available supercapacitor cell. Electrode D is a 390 µm thick composite electrode prepared using commercially available battery grade Ni(OH)₂ based powder and the same composite making procedure described in Example 4.

The superior capacity retention at high discharge rates of the mesoporous Ni(OH)₂ based electrode over Electrode D demonstrates that the superior performance of the former is due to the use of the mesoporous material and not the composite electrode fabrication procedure.

### EXAMPLE 6

### Ni-Cd Cell Construction and Testing

Evaluation of the mesoporous Ni(OH)₂ based composite electrode as a positive electrode in a Ni-Cd battery was carried out. The Ni(OH)₂ based composite electrode prepared in Example 4 was first impregnated with 6M KOH electrolyte under vacuum. The electrode was then used in assembly of the cell by sandwiching a 150 µm thick, 6 M KOH soaked fibrous separator with the Ni(OH)₂ electrode and a Cd based negative electrode taken from a commercially available Ni-Cd cell. The assembled cell was then inserted into a test cell packaging for electrochemical evaluation.

The mesoporous Ni(OH)₂-Cd cell was tested by constant current charge/discharge cycling between 0.6 V and 1.4 V. First, an initial capacity check was undertaken by charging the cell at C/10 rate to a 150 % depth of charge and discharged at C/10 rate. A rate test was then carried out using the practical discharge capacity obtained from the C/10 capacity check. The electrode was rate tested at 7C rate and the voltage during discharge was monitored.

Figure 4 compares the capacity retentive ability of the Ni-Cd cell containing mesoporous Ni(OH)₂ with the capacity retention of a cell using commercially available Ni(OH)₂ (Electrode D of Example 5) during a 7C rate discharge. At this rate the cell utilising mesoporous Ni(OH)₂ retains 80% of its total (C/10) capacity, while the cell containing commercially available Ni(OH)₂ retains only 31 % of its total capacity. This indicates that the mesoporous Ni(OH)₂ electrode is capable of significantly higher power than conventional Ni(OH)₂ material.

## Claims

1. An electrode for an electrochemical cell, which comprises mesoporous nickel hydroxide having a pore size within the range from 1 to 50 nm and being substantially free from metallic nickel or nickel oxide, together with a conductivity enhancer and a binder, the nickel hydroxide having been prepared by depositing nickel hydroxide from a liquid crystal templating medium.

2. An electrode according to Claim 1, in which the mesoporous nickel hydroxide has a pore size within the range from 1 to 20 nm.

3. An electrode according to Claim 2, in which the mesoporous nickel hydroxide has a pore size within the range from 1.5 to 12 nm.

4. An electrode according to any one of the preceding Claims, in which at least 75% of pores have pore diameters to within 60% of average pore diameter.

5. An electrode according to Claim 4, in which at least 75% of pores have pore diameters to within 30%, preferably within 10%, of average pore diameters.

6. An electrode according to Claim 5, in which at least 75% of pores have pore diameters to within 5% of average pore diameter.

7. An electrode according to any one of the preceding Claims, in which the electrode is supported on a substrate.

8. An electrode according to Claim 7, in which the substrate acts as a current collector.

9. An electrode according to Claim 7 or Claim 8, in which the substrate is a porous metal and the nickel hydroxide resides in the pores thereof.

10. An electrode according to any one of Claims 7 to 9, in which the substrate is of nickel.

11. An electrochemical cell comprising a positive electrode, a negative electrode and an electrolyte in a container therefore, the positive electrode being an electrode according to Claim 1.

12. An electrochemical cell according to Claim 11, in which the electrode is as defined in any one of Claims 1 to 10.

13. A process for preparing an electrochemical cell, which process comprises:
(a) depositing nickel hydroxide from a liquid crystal templating medium to form a mesoporous nickel hydroxide;
(b) forming an electrode by mixing said mesoporous nickel hydroxide substantially free from metallic nickel or nickel oxide with a conductivity enhancer and a binder; and
(c) assembling an electrochemical cell comprising, as the positive electrode, the electrode formed in step (b), associated with a current collector.

14. A process according to Claim 13, in which the electrode is as defined in any one of Claims 1 to 10.

## Patentansprüche

1. Elektrode für eine elektrochemische Zelle, die mesoporöses Nickelhydroxid, das eine Porengröße im Bereich von 1 bis 50 nm aufweist und im wesentlichen frei von metallischem Nickel oder Nickeloxid ist, zusammen mit einem Leitfähigkeitsverbesserer und einem Bindemittel umfasst, wobei das Nickelhydroxid durch Abscheiden von Nickelhydroxid aus einem Flüssigkristall-Schablenierungsmedium hergestellt worden ist.

2. Elektrode nach Anspruch 1, wobei das mesoporöse Nickelhydroxid eine Porengröße im Bereich von 1 bis 20 nm aufweist.

3. Elektrode nach Anspruch 2, wobei das mesoporöse Nickelhydroxid eine Porengröße im Bereich von 1,5 bis 12 nm aufweist.

4. Elektrode nach einem der vorhergehenden Ansprüche, wobei mindestens 75% der Poren Porendurchmesser von weniger als 60% des mittleren Porendurchmessers aufweisen.

5. Elektrode nach Anspruch 4, wobei mindestens 75% der Poren Porendurchmesser von weniger als 30%, vorzugsweise weniger als 10% des mittleren Porendurchmessers aufweisen.

6. Elektrode nach Anspruch 5, wobei mindestens 75% der Poren Porendurchmesser von weniger als 5% des mittleren Porendurchmessers aufweisen.

7. Elektrode nach einem der vorhergehenden Ansprüche, wobei die Elektrode auf einem Substrat getragen wird.

8. Elektrode nach Anspruch 7, wobei das Substrat als Stromsammler fungiert.

9. Elektrode nach Anspruch 7 oder 8, wobei das Substrat ein poröses Metall ist und das Nickelhydroxid sich in dessen Poren befindet.

10. Elektrode nach einem der Ansprüche 7 bis 9, wobei das Substrat aus Nickel ist

11. Elektrochemische Zelle, umfassend eine positive Elektrode, eine negative Elektrode und einen Elektrolyten in einem Behälter dafür, wobei die positive Elektrode eine Elektrode nach Anspruch 1 ist.

12. Elektrochemische Zelle nach Anspruch 11, wobei die Elektrode wie in einem der Ansprüche 1 bis 10 definiert ist.

13. Prozess zur Herstellung einer elektrochemischen Zelle, wobei der Prozess umfasst:
(a) Abscheiden von Nickelhydroxid aus einem Flüssigkristall-Schablonierungsmedium, um ein mesoporöses Nickelhydroxid auszubilden;
(b) Ausbilden einer Elektrode durch Mischen des mesoporösen Nickelhydroxids, das im wesentlichen frei von Nickel oder Nickeloxid ist, mit einem Leitfähigkeitsverbesserer und einem Bindemittel, und
(c) Zusammensetzen einer elektrochemischen Zelle, die als die positive Elektrode die in Schritt (b) ausgebildete Elektrode umfasst, die mit einem Stromsammler verbunden ist.

14. Prozess nach Anspruch 13, wobei die Elektrode wie in einem der Ansprüche 1 bis 10 definiert ist.

## Revendications

1. Electrode pour pile électrochimique, qui comprend de l'hydroxyde de nickel mésoporeux ayant une taille de pore dans la plage de 1 à 50 nm et étant sensiblement dépourvue de nickel métallique ou d'oxyde de nickel, conjointement avec un amplificateur de conductivité et un liant, l'hydroxyde de nickel ayant été préparé par dépôt d'hydroxyde de nickel à partir d'un milieu de formation de modèle à cristaux liquides.

2. Electrode selon la revendication 1, dans laquelle l'hydroxyde de nickel mésoporeux a une taille de pore dans la plage de 1 à 20 nm.

3. Electrode selon la revendication 2, dans laquelle l'hydroxyde de nickel mésoporeux a une taille de pore dans la plage de 1,5 à 12 nm.

4. Electrode selon l'une quelconque des revendications précédentes, dans laquelle au moins 75 % des pores ont des diamètres de pore à moins de 60 % du diamètre de pore moyen.

5. Electrode selon la revendication 4, dans laquelle au moins 75 % des pores ont des diamètres de pore à moins de 30 %, de préférence à moins de 10 %, du diamètre de pore moyen.

6. Electrode selon la revendication 5, dans laquelle au moins 75 % des pores ont des diamètres de pore à moins de 5 % du diamètre de pore moyen.

7. Electrode selon l'une quelconque des revendications précédentes, dans laquelle l'électrode est supportée sur un substrat.

8. Electrode selon la revendication 7, dans laquelle le substrat agit comme un collecteur de courant.

9. Electrode selon la revendication 7 ou la revendication 8, dans laquelle le substrat est un métal poreux dans les pores duquel l'hydroxyde de nickel réside.

10. Electrode selon l'une quelconque des revendications 7 à 9, dans laquelle le substrat est en nickel.

11. Pile électrochimique comprenant une électrode positive, une électrode négative et un électrolyte dans un contenant destiné à cet effet, l'électrode positive étant une électrode selon la revendication 1.

12. Pile électrochimique selon la revendication 11, dans laquelle l'électrode est telle que définie dans l'une quelconque des revendications 1 à 10.

13. Procédé de préparation d'une pile électrochimique, lequel procédé comprend les étapes consistant à :
(a) déposer de l'hydroxyde de nickel à partir d'un milieu de formation de modèle à cristaux liquides pour former un hydroxyde de nickel mésoporeux ;
(b) former une électrode en mélangeant ledit hydroxyde de nickel mésoporeux sensiblement dépourvu de nickel métallique ou d'oxyde de nickel avec un amplificateur de conductivité et un liant ; et
(c) assembler une pile électrochimique comprenant, comme électrode positive, l'électrode formée à l'étape (b), associée à un collecteur de courant.

14. Procédé selon la revendication 13, dans lequel l'électrode est telle que définie dans l'une quelconque des revendications 1 à 10.
